# EUROPÄISCHE PATENTANMELDUNG

(11) **EP 4 703 085 A1**
(43) Veröffentlichungstag der Anmeldung: **04.03.2026**
(21) Anmeldenummer: 24197026.8
(22) Anmeldetag: 28.08.2024
(51) Int. Cl.: B23Q 39/02, B23Q 39/04, B23Q 39/00

(54) **WERKZEUGMASCHINE MIT ZWEI ENTLANG EINER LANGEN X-ACHSE VERFAHRBAREN BEARBEITUNGSEINHEITEN SOWIE ZUGEHÖRIGES VERFAHREN**

(71) Anmelder: Schwäbische Werkzeugmaschinen GmbH, 78713 Schramberg-Waldmössingen (DE)
(72) Erfinder: WEBER, Stefan, 78662 Bösingen (DE)
(74) Vertreter: Kohler Schmid Möbus Patentanwälte

(57) **Zusammenfassung**

Eine erfindungsgemäße Werkzeugmaschine (1) zur spanenden Bearbeitung von Werkstücken umfasst einen linken Bearbeitungsraum (11a) mit einem linken Werkstücktisch (12a) zum Aufspannen von linken Werkstücken (2a) und einen rechten Bearbeitungsraum (11b) mit einem rechten Werkstücktisch (12b) zum Aufspannen von rechten Werkstücken (2b), und eine entlang einer X-Achse (X) verfahrbare, linke Bearbeitungseinheit (10a) mit einer linken Arbeitsspindel (14a) zur Bearbeitung von Werkstücken (2a, 2b) und eine entlang der X-Achse (X) verfahrbare, rechte Bearbeitungseinheit (10b) mit einer rechten Arbeitsspindel (14b) zur Bearbeitung von Werkstücken (2a, 2b). Die linke Bearbeitungseinheit (10a) ist zwischen einer linken Endposition und der rechten Bearbeitungseinheit (10b) verfahrbar, und die rechte Bearbeitungseinheit (10b) ist zwischen einer rechten Endposition und der linken Bearbeitungseinheit (10a) verfahrbar. Wenn sich die linke Bearbeitungseinheit (10a) in ihrer linken Endposition befindet und die rechte Bearbeitungseinheit (10b) bis zur Anlage an die linke Bearbeitungseinheit (10a) verfahren ist, ist die rechte Bearbeitungseinheit (10b) zumindest teilweise in dem linken Bearbeitungsraum (11a) für eine Bearbeitung von linken Werkstücken (2) angeordnet. Wenn sich die rechte Bearbeitungseinheit (10b) in ihrer rechten Endposition befindet und die linke Bearbeitungseinheit (10a) bis zur Anlage an die rechte Bearbeitungseinheit (10b) verfahren ist, ist die linke Bearbeitungseinheit (10a) zumindest teilweise in dem rechten Bearbeitungsraum (11b) für eine Bearbeitung von rechten Werkstücken (2) angeordnet.

## Beschreibung

Die Erfindung betrifft eine Werkzeugmaschine zur insbesondere spanenden Bearbeitung von Werkstücken mit mindestens einem Arbeitsraum und mit mindestens einer Bearbeitungseinheit zur Bearbeitung der im Arbeitsraum angeordneten Werkstücke.

Derartige Werkzeugmaschine sind hinlänglich bekannt.

Demgegenüber ist es die Aufgabe der vorliegenden Erfindung, eine bezüglich der Werkstückbearbeitung möglichst vielseitige Werkzeugmaschine anzugeben. Insbesondere sollen ein Werkzeugwechsel oder das Be- und Entladen möglichst hauptzeitparallel erfolgen.

Diese Aufgabe wird erfindungsgemäß gelöst durch eine Werkzeugmaschine zur spanenden Bearbeitung von Werkstücken, aufweisend
- einen linken Bearbeitungsraum mit einem linken Werkstücktisch zum Aufspannen von linken Werkstücken und einen rechten Bearbeitungsraum mit einem rechten Werkstücktisch zum Aufspannen von rechten Werkstücken, und
- eine entlang einer X-Achse verfahrbare, linke Bearbeitungseinheit mit einer linken Arbeitsspindel zur Bearbeitung von Werkstücken und eine entlang der X-Achse verfahrbare, rechte Bearbeitungseinheit mit einer rechten Arbeitsspindel zur Bearbeitung von Werkstücken, wobei die linke Bearbeitungseinheit zwischen einer linken Endposition und der rechten Bearbeitungseinheit verfahrbar ist und die rechte Bearbeitungseinheit zwischen einer rechten Endposition und der linken Bearbeitungseinheit verfahrbar ist,
wobei, wenn sich die linke Bearbeitungseinheit in ihrer linken Endposition befindet und die rechte Bearbeitungseinheit bis zur Anlage an die linke Bearbeitungseinheit verfahren ist, die rechte Bearbeitungseinheit zumindest teilweise in dem linken Bearbeitungsraum für eine Bearbeitung von linken Werkstücken angeordnet ist und/oder, wenn sich die rechte Bearbeitungseinheit in ihrer rechten Endposition befindet und die linke Bearbeitungseinheit bis zur Anlage an die rechte Bearbeitungseinheit verfahren ist, die linke Bearbeitungseinheit zumindest teilweise in dem rechten Bearbeitungsraum für eine Bearbeitung von rechten Werkstücken angeordnet ist.

Erfindungsgemäß sind zwei entlang einer langen X-Achse verfahrbare Bearbeitungseinheiten und zwei in X-Richtung beabstandete Werkstücktische vorgesehen, wodurch wahlweise entweder eine separate Bearbeitung von Werkstücken im jeweiligen Arbeitsraum ausschließlich durch die zugehörge Bearbeitungseinheit oder eine gemeinsame Bearbeitung von Werkstücken in einem Arbeitsraum durch beide Bearbeitungseinheiten ermöglicht wird.

Die linke Arbeitsspindel und die rechte Arbeitsspindel können gleich oder auch unterschiedlich groß bzw. leistungsstark sein. Im letzteren Fall kann beispielsweise die größere, leistungsstärkere Spindel der rechten Seite im linken Bearbeitungsraum "aushelfen".

Wenn sich die linke Bearbeitungseinheit in ihrer linken Endposition befindet, überdeckt die rechte Arbeitsspindel den linken Bearbeitungsraum in X-Richtung bevorzugt mindestens zu 50%, besonders bevorzugt mindestens zu 70%. Wenn sich die rechte Bearbeitungseinheit in ihrer rechten Endposition befindet, überdeckt die linke Arbeitsspindel den rechten Bearbeitungsraum in X-Richtung bevorzugt mindestens zu 50%, besonders bevorzugt mindestens zu 70%.

Vorzugsweise ist die X-Breite des linken Bearbeitungsraums und die X-Breite des rechten Bearbeitungsraums jeweils mindestens doppelt so groß wie der minimal mögliche X-Spindelabstand der beiden Arbeitsspindeln. Durch diese Maßnahme ist es möglich, dass bei einer gemeinsamen Bearbeitung die beiden Arbeitsspindeln jeweils mindestens 50% der X-Breite eines Arbeitsraums abdecken können. Die X-Breite des linken Bearbeitungsraums und die X-Breite des rechten Bearbeitungsraums sind vorteilhaft gleich groß, können aber auch unterschiedlich sein.

Die Werkzeugmaschine weist bevorzugt mindestens eine entlang der X-Achse verlaufende Bodenschiene auf, in der sowohl die linke Bearbeitungseinheit, insbesondere ein linker Fahrständer der linken Bearbeitungseinheit, als auch die rechte Bearbeitungseinheit, insbesondere ein rechter Fahrständer der rechten Bearbeitungseinheit, in X-Richtung verfahrbar geführt sind. Im Fall von Fahrständern handelt es sich um eine Werkzeugmaschine in Fahrständerbauweise.

Die beiden Bearbeitungseinheiten können in einer gemeinsamen Bodenschiene oder jeweils in einer eigenen Bodenschiene verfahr geführt sein, wobei im letzteren Fall die beiden Bearbeitungseinheiten in X-Richtung nicht aneinander vorbeifahren können. Beispielsweise ist der linke Fahrständer und der rechte Fahrständer jeweils L-förmig mit einem kurzen Horizontalschenkel, welcher in der mindestens einen Bodenschiene verschiebbar geführt ist, und mit einem langen Vertikalschenkel, welcher die Arbeitsspindel trägt, ausgebildet und entlang der X-Achse mit den freien Enden ihrer Horizontalschenkel einander zugewandt oder einander abgewandt angeordnet. Vorteilhaft können der linke Fahrständer und der rechte Fahrständer zueinander spiegelsymmetrisch ausgebildet sein.

In einer bevorzugten Ausführungsform der Erfindung ist die linke Endposition der linken Bearbeitungseinheit die äußerst linke Bearbeitungsposition der linken Bearbeitungseinheit und/oder die rechte Endposition der rechten Bearbeitungseinheit die äußerst rechte Bearbeitungsposition der rechten Bearbeitungseinheit.

In einer anderen, besonders bevorzugten Ausführungsform der Erfindung ist die linke Endposition der linken Bearbeitungseinheit weiter links als die äußerst linke Bearbeitungsposition der linken Bearbeitungseinheit angeordnet und/oder die rechte Endposition der rechten Bearbeitungseinheit weiter rechts als die äußerst rechte Bearbeitungsposition der rechten Bearbeitungseinheit angeordnet. Hierdurch werden während eines Werkzeugwechsels der einen Bearbeitungseinheit in deren Arbeitsraum eine hauptzeitparalle Bearbeitung durch die andere Bearbeitungseinheit und eine hauptzeitparalleBe- und Entladung von Werkstücken im anderen Arnbeitsraum ermöglicht. Beispielsweise kann die linke Endposition der linken Bearbeitungseinheit eine linke Werkzeugwechselposition zum Wechseln von Werkzeugen aus einem Werkzeugmagazin in die linke Bearbeitungseinheit und umgekehrt sein und/oder die rechte Endposition der rechten Bearbeitungseinheit eine rechte Werkzeugwechselposition zum Wechseln von Werkzeugen aus einem Werkzeugmagazin (in die rechte Bearbeitungseinheit und umgekehrt sein. Vorteilhaft hat die Werkzeugmaschine ein linkes Werkzeugmagazin, das Werkzeuge in die linke Bearbeitungseinheit ein- und auswechselt, und ein rechtes Werkzeugmagazin, das Werkzeuge in die rechte Bearbeitungseinheit ein- und auswechselt.

Vorzugsweise ist vorgesehen, dass ein linker Schwenkträger, der im linken Bearbeitungsraum um eine zur X-Achse parallele A-Achse drehbar gelagert ist, den linken Werkstücktisch aufweist und/oder ein rechter Schwenkträger, der im rechten Bearbeitungsraum um eine zur X-Achse parallele A-Achse drehbar gelagert ist, den rechten Werkstücktisch aufweist. So können Werkstücke von oben - manuell oder mittels eines Roboters - auf dem Werkstücktisch platziert werden, die dann, nach einer 180°-Drehung des Schwenkträgers, nach unten hängend bearbeitet werden, wodurch die bei der Bearbeitung anfallenen Späne ungehindert nach unten fallen können. Zusätzlich können der linke Werkstücktisch am linken Schwenkträger und/oder der rechte Werkstücktisch am rechten Schwenkträger jeweils um eine zur A-Achse rechtwinklige C-Achse drehbar gelagert sein.

Die Erfindung betrifft auch ein Verfahren zum Bearbeiten von Werkstücken an einer wie oben ausgebildeten Werkzeugmaschine, wobei in einem ersten Bearbeitungsmodus linke Werkstücke ausschließlich von der linken Arbeitsspindel und rechte Werkstücke ausschließlich von der rechten Arbeitsspindel bearbeitet werden und wobei in einem zweiten Bearbeitungsmodus linke Werkstücke sowohl von der linken Arbeitsspindel als auch von der rechten Arbeitsspindel und/oder rechte Werkstücke sowohl von der linken Arbeitsspindel als auch von der rechten Arbeitsspindel bearbeitet werden.

Optional kann in einem dritten Bearbeitungsmodus eine der beiden Bearbeitungseinheiten für einen Werkzeugwechsel in ihre jeweilige Endposition verfahren werden, und rechte und/oder linke Werkstücke können von der anderen Bearbeitungseinheit hauptzeitparallel bearbeitet werden.

Weitere Vorteile der Erfindung ergeben sich aus der Beschreibung und der Zeichnung. Die gezeigte und beschriebenen Ausführungsform ist nicht als abschließende Aufzählung zu verstehen, sondern hat vielmehr beispielhaften Charakter für die Schilderung der Erfindung.

Es zeigen:
- Fig. 1: eine Draufsicht von oben auf eine erfindungsgemäße Werkzeugmaschine mit einer linken und einer rechten Bearbeitungseinheit, die entlang einer langen X-Achse verfahrbar sind, wobei die linke Bearbeitungseinheit in einem linken Bearbeitungsraum und die rechte Bearbeitungseinheit in einem rechten Bearbeitungsraum angeordnet sind;
- Fig. 2: eine Frontansicht des linken und des rechten Bearbeitungsraums;
- Fig. 3: eine perspektivische Ansicht der linken Bearbeitungseinheit;
- Fign. 4a, 4b: die Werkzeugmaschine von Fig. 1, wobei die linke und die rechte Bearbeitungseinheit beide im linken Bearbeitungsraum (Fig. 4a) oder beide im rechten Bearbeitungsraum (Fig. 4b) angeordnet sind; und
- Fign. 5a, 5b: die Werkzeugmaschine von Fig. 1, wobei die linke Bearbeitungseinheit in einer linken Werkzeugwechselposition und die rechte Bearbeitungseinheit im linken Bearbeitungsraum in Anlage an der linken Bearbeitungseinheit angeordnet ist (Fig. 5a) und wobei die rechte Bearbeitungseinheit in einer rechten Werkzeugwechselposition und die linke Bearbeitungseinheit im rechten Bearbeitungsraum in Anlage an der rechten Bearbeitungseinheit angeordnet ist (Fig. 5b).

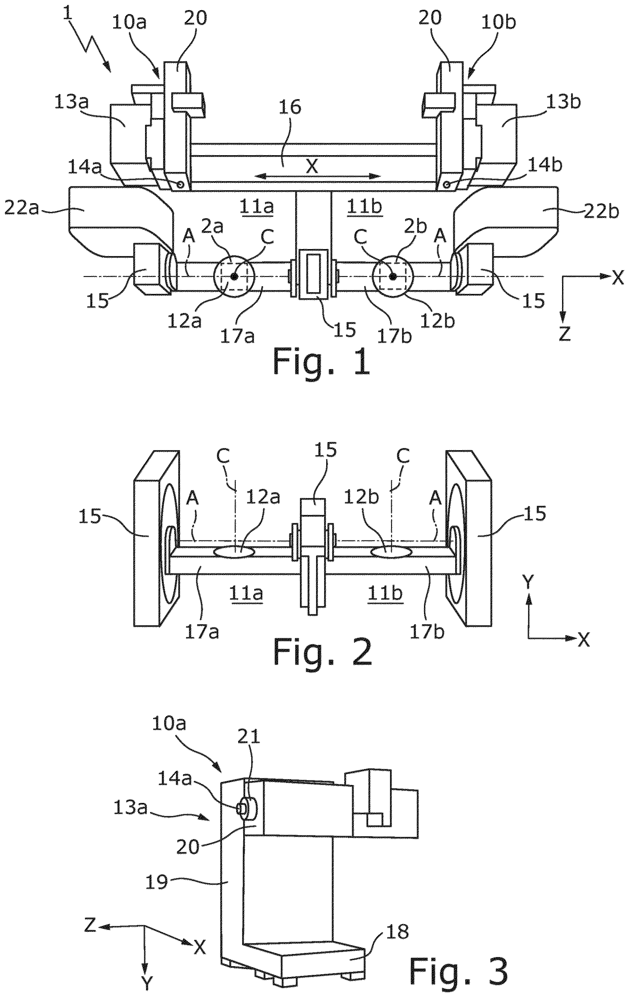

Die in **Fig. 1** gezeigte Werkzeugmaschine **1** zur spanenden Bearbeitung von Werkstücken umfasst einen linken Bearbeitungsraum **11a** mit einem, hier runden, linken Werkstücktisch **12a** zum Aufspannen von linken Werkstücken **2a** und einen rechten Bearbeitungsraum **11b** mit einem, hier runden, rechten Werkstücktisch **12b** zum Aufspannen von rechten Werkstücken **2b,** sowie eine entlang einer langen **X**-Achse verfahrbare, linke Bearbeitungseinheit **10a** mit einer linken Arbeitsspindel **14a** zur Bearbeitung von Werkstücken 2a, 2b und eine entlang der langen X-Achse verfahrbare, rechte Bearbeitungseinheit **10b** mit einer rechten Arbeitsspindel **14b** zur Bearbeitung von Werkstücken 2a, 2b. Die X-Breite des linken Bearbeitungsraums 11a und die X-Breite des rechten Bearbeitungsraums 11b sind im gezeigten Ausführungsbeispiel gleich groß, können aber in nicht gezeigten Ausführungsbeispiel auch unterschiedlich sein.

Die lange X-Achse ist durch eine im Maschinengestell **15,** hier im Maschinensockel, der Werkzeugmaschine 1 verlaufende Bodenschiene **16** gebildet, in der sowohl die linke Bearbeitungseinheit 10a, hier ein linker Fahrständer **13a** der linken Bearbeitungseinheit 10a, als auch die rechte Bearbeitungseinheit 10b, hier ein rechter Fahrständer **13b** der rechten Bearbeitungseinheit 10b, in X-Richtung verfahrbar geführt sind. Bei der gezeigten Werkzeugmaschine 1 handelt es sich also um eine Werkzeugmaschine in Fahrständerbauweise.

Im Maschinengestell 15 sind, wie in **Fig. 2** gezeigt, ein linker Schwenkträger **17a** im linken Bearbeitungsraum 11a und ein rechter Schwenkträger **17b** im rechten Bearbeitungsraum 11b jeweils um eine zur X-Achse parallele **A**-Achse drehbar gelagert. Der linke Schwenkträger 17a weist den linken Werkstücktisch 12a und der rechte Schwenkträger 17b den rechten Werkstücktisch 12b auf. Zusätzlich können der linke Werkstücktisch 12a am linken Schwenkträger 17a und der rechte Werkstücktisch 12b am rechten Schwenkträger 17b jeweils um eine zur A-Achse rechtwinklige C-Achse drehbar gelagert sein.

Wie in **Fig. 3** am Beispiel der linken Bearbeitungseinheit 10a gezeigt, sind die beiden Fahrständer 13a, 13b jeweils L-förmig ausgebildet mit einem, hier kurzen Horizontalschenkel **18,** welcher in der Bodenschiene 16 verschiebbar geführt ist, und mit einem, hier langen Vertikalschenkel **19,** welcher die jeweilige Arbeitsspindel 14a, 14b trägt. Am Vertikalschenkel 19 ist die Arbeitsspindel 14a, 14b über entsprechende Schlitten **20, 21** in Y- und Z-Richtung verschiebbar geführt. Die beiden Fahrständer 13a, 13b sind entlang der X-Achse mit den freien Enden ihrer Horizontalschenkel 18 einander zugewandt und bevorzugt, wie vorliegend gezeigt, zueinander spiegelsymmetrisch ausgebildet.

Die linke Bearbeitungseinheit 10a ist entlang der X-Achse zwischen einer linken Endposition und der rechten Bearbeitungseinheit 10b verfahrbar. Die linke Endposition kann beispielsweise die im linken Bearbeitungsraum 11a äußerst linke Bearbeitungsposition der linken Bearbeitungseinheit 10a sein oder aber noch weiter links als diese äußerst linke Bearbeitungsposition liegen. Die rechte Bearbeitungseinheit 10b ist entlang der X-Achse zwischen einer rechten Endposition und der linken Bearbeitungseinheit 10a verfahrbar. Die rechte Endposition kann beispielsweise die im rechten Bearbeitungsraum 11b äußerst rechte Bearbeitungsposition der rechten Bearbeitungseinheit 10b sein oder aber noch weiter rechts als diese äußerst rechte Bearbeitungsposition liegen.

In Fig. 1 ist die linke Bearbeitungseinheit 10a in ihrer im linken Bearbeitungsraum 11a äußerst linken Bearbeitungsposition und die rechte Bearbeitungseinheit 10b in ihrer im rechten Bearbeitungsraum 11b äußerst rechten Bearbeitungsposition gezeigt.

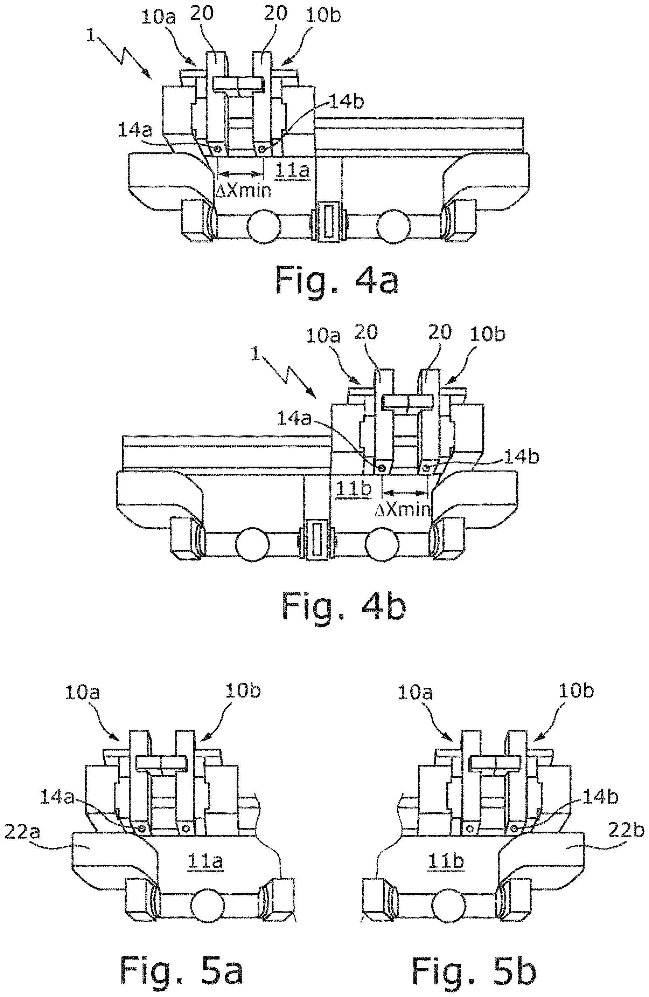

In **Fig. 4a** befindet sich die linke Bearbeitungseinheit 10a in ihrer äußerst linken Bearbeitungsposition, und die rechte Bearbeitungseinheit 10b ist nach links bis zur Anlage an der linken Bearbeitungseinheit 10a verfahren. In dieser Anlageposition überdeckt die rechte Arbeitsspindel 14b den linken Bearbeitungsraum 11a in X-Richtung bevorzugt mindestens zu 50%, besonders bevorzugt mindestens zu 70%.

In **Fig. 4b** befindet sich die rechte Bearbeitungseinheit 10b in ihrer äußerst rechten Bearbeitungsposition, und die linke Bearbeitungseinheit 10a ist nach rechts bis zur Anlage an der rechten Bearbeitungseinheit 10b verfahren. In dieser Anlageposition überdeckt die linke Arbeitsspindel 14a den rechten Bearbeitungsraum 11b in X-Richtung bevorzugt mindestens zu 50%, besonders bevorzugt mindestens zu 70%.

Der minimal mögliche X-Spindelabstand der beiden Arbeitsspindeln 14a, 14b, also wenn die beiden Bearbeitungseinheiten 10a, 10b aneinander anliegen, ist in den Fign. 4a, 4b mit **ΔXmin** bezeichnet. Vorzugsweise sind die X-Breite des linken Bearbeitungsraums 11a und die X-Breite des rechten Bearbeitungsraums 11b jeweils mindestens doppelt so groß wie der minimal mögliche X-Spindelabstand ΔXmin.

In **Fig. 5a** befindet sich die linke Bearbeitungseinheit 10a in einer linken Endposition, die weiter links als ihre äußerst linke Bearbeitungsposition angeordnet ist und eine linke Werkzeugwechselposition bildet, in der Werkzeuge aus einem linken Werkzeugmagazin **22a** in die linke Bearbeitungseinheit 10a ein- und ausgewechselt werden können. Die rechte Bearbeitungseinheit 10b ist nach links bis zur Anlage an der linken Bearbeitungseinheit 10a verfahren.

In **Fig. 5b** befindet sich die rechte Bearbeitungseinheit 10b in einer rechten Endposition, die weiter rechts als ihre äußerst rechte Bearbeitungsposition angeordnet ist und eine rechte Werkzeugwechselposition bildet, in der Werkzeuge aus einem rechten Werkzeugmagazin **22b** in die rechte Bearbeitungseinheit 10b ein- und ausgewechselt werden können. Die linke Bearbeitungseinheit 10a ist nach rechts bis zur Anlage an der rechten Bearbeitungseinheit 10b verfahren.

In Fig. 1 ist die Werkzeugmaschine 1 in einem ersten Bearbeitungsmodus ("separate Bearbeitung"), in dem linke Werkstücke 2a ausschließlich von der linken Arbeitsspindel 14a und rechte Werkstücke 2b ausschließlich von der rechten Arbeitsspindel 14b bearbeitet werden.

In Fign. 4a, 4b ist die Werkzeugmaschine 1 in einem zweiten Bearbeitungsmodus ("gemeinsame Bearbeitung"), in dem linke Werkstücke 2a sowohl von der linken Arbeitsspindel 14a als auch von der rechten Arbeitsspindel 14b bearbeitet werden (Fig. 4a) oder rechte Werkstücke 2b sowohl von der linken Arbeitsspindel 14a als auch von der rechten Arbeitsspindel 14b bearbeitet werden (Fig. 4b). In dem Arbeitsraum, in dem keine Bearbeitung stattfindet, kann hauptzeitparallel eine Be- oder Entladung von Werkstücken stattfinden.

In Fign. 5a, 5b ist die Werkzeugmaschine 1 in einem dritten Bearbeitungsmodus, in dem eine der beiden Bearbeitungseinheiten 10a, 10b für einen Werkzeugwechsel in ihre jeweilige End- bzw. Werkzeugwechselposition verfahren ist und hauptzeitparallel rechte und/oder linke Werkstücke 2a, 2b von der anderen Bearbeitungseinheit bearbeitet werden.

Statt voneinander separat wie im gezeigten Ausführungsbeispiel, können der linke und der rechte Arbeitsraum 11a, 11b alternativ auch durch die linke und die rechte Seite eines einzigen Arbeitsraums gebildet sein.

Statt voneinander separat wie im gezeigten Ausführungsbeispiel, können der linke und der rechte Werkstücktisch 17a, 17b alternativ auch durch die linke und die rechte Seite eines einzigen Werkstücktischs gebildet sein.

Statt voneinander separat wie im gezeigten Ausführungsbeispiel, können der linke und der rechte Schwenkträger 17a, 17b alternativ auch durch die linke und die rechte Seite eines einzigen Schwenkträgers gebildet sein.

## Patentansprüche

1. Werkzeugmaschine (1) zur spanenden Bearbeitung von Werkstücken, aufweisend
- einen linken Bearbeitungsraum (11a) mit einem linken Werkstücktisch (12a) zum Aufspannen von linken Werkstücken (2a) und einen rechten Bearbeitungsraum (11b) mit einem rechten Werkstücktisch (12b) zum Aufspannen von rechten Werkstücken (2b), und
- eine entlang einer X-Achse (X) verfahrbare, linke Bearbeitungseinheit (10a) mit einer linken Arbeitsspindel (14a) zur Bearbeitung von Werkstücken (2a, 2b) und eine entlang der X-Achse (X) verfahrbare, rechte Bearbeitungseinheit (10b) mit einer rechten Arbeitsspindel (14b) zur Bearbeitung von Werkstücken (2a, 2b), wobei die linke Bearbeitungseinheit (10a) zwischen einer linken Endposition und der rechten Bearbeitungseinheit (10b) verfahrbar ist und die rechte Bearbeitungseinheit (10b) zwischen einer rechten Endposition und der linken Bearbeitungseinheit (10a) verfahrbar ist,
wobei, wenn sich die linke Bearbeitungseinheit (10a) in ihrer linken Endposition befindet und die rechte Bearbeitungseinheit (10b) bis zur Anlage an die linke Bearbeitungseinheit (10a) verfahren ist, die rechte Bearbeitungseinheit (10b) zumindest teilweise in dem linken Bearbeitungsraum (11a) für eine Bearbeitung von linken Werkstücken (2) angeordnet ist und/oder, wenn sich die rechte Bearbeitungseinheit (10b) in ihrer rechten Endposition befindet und die linke Bearbeitungseinheit (10a) bis zur Anlage an die rechte Bearbeitungseinheit (10b) verfahren ist, die linke Bearbeitungseinheit (10a) zumindest teilweise in dem rechten Bearbeitungsraum (11b) für eine Bearbeitung von rechten Werkstücken (2) angeordnet ist.

2. Werkzeugmaschine nach Anspruch 1, **dadurch gekennzeichnet, dass**, wenn sich die linke Bearbeitungseinheit (10a) in ihrer linken Endposition befindet, die rechte Arbeitsspindel (14b) den linken Bearbeitungsraum (11a) in X-Richtung mindestens zu 50%, insbesondere mindestens zu 70%, überdeckt und/oder, wenn sich die rechte Bearbeitungseinheit (10b) in ihrer rechten Endposition befindet, die linke Arbeitsspindel (14a) den rechten Bearbeitungsraum (11b) in X-Richtung mindestens zu 50%, insbesondere mindestens zu 70%, überdeckt.

3. Werkzeugmaschine nach Anspruch 1 oder 2, **dadurch gekennzeichnet, dass** die X-Breite des linken Bearbeitungsraums (11a) mindestens doppelt so groß wie der minimal mögliche X-Spindelabstand (ΔXmin) der beiden Arbeitsspindeln (14a, 14b) ist und/oder die X-Breite des rechten Bearbeitungsraums (11b) mindestens doppelt so groß wie der minimal mögliche X-Spindelabstand (ΔXmin) der beiden Arbeitsspindeln (14a, 14b) ist.

4. Werkzeugmaschine nach einem der vorhergehenden Ansprüche, **dadurch gekennzeichnet, dass** die X-Breite des linken Bearbeitungsraums (11a) und die X-Breite des rechten Bearbeitungsraums (11b) gleich sind.

5. Werkzeugmaschine nach einem der vorhergehenden Ansprüche, **gekennzeichnet durch** mindestens eine entlang der X-Achse (X) verlaufende Bodenschiene (16), in der sowohl die linke Bearbeitungseinheit (10a), insbesondere ein linker Fahrständer (13a) der linken Bearbeitungseinheit (10a), als auch die rechte Bearbeitungseinheit (10b), insbesondere ein rechter Fahrständer (13b) der rechten Bearbeitungseinheit (10b), in X-Richtung verfahrbar geführt sind.

6. Werkzeugmaschine nach Anspruch 5, **dadurch gekennzeichnet, dass** der linke Fahrständer (13a) und der rechte Fahrständer (13b) jeweils L-förmig mit einem Horizontalschenkel (18), welcher in der mindestens einen Bodenschiene (16) verschiebbar geführt ist, und mit einem Vertikalschenkel (19), welcher die Arbeitsspindel (14a, 14b) trägt, ausgebildet sind und entlang der X-Achse (X) mit den freien Enden ihrer Horizontalschenkel (18) einander zugewandt oder einander abgewandt angeordnet sind.

7. Werkzeugmaschine nach Anspruch 5 oder 6, **dadurch gekennzeichnet, dass** der linke Fahrständer (13a) und der rechte Fahrständer (13b) zueinander spiegelsymmetrisch ausgebildet sind.

8. Werkzeugmaschine nach einem der vorhergehenden Ansprüche, **dadurch gekennzeichnet, dass** die linke Endposition der linken Bearbeitungseinheit (10a) die äußerst linke Bearbeitungsposition der linken Bearbeitungseinheit (10a) und/oder die rechte Endposition der rechten Bearbeitungseinheit (10b) die äußerst rechte Bearbeitungsposition der rechten Bearbeitungseinheit (10b) ist.

9. Werkzeugmaschine nach einem der Ansprüche 1 bis 7, **dadurch gekennzeichnet, dass** die linke Endposition der linken Bearbeitungseinheit (10a) weiter links als die äußerst linke Bearbeitungsposition der linken Bearbeitungseinheit (10a) angeordnet ist und/oder die rechte Endposition der rechten Bearbeitungseinheit (10b) weiter rechts als die äußerst rechte Bearbeitungsposition der rechten Bearbeitungseinheit (10b) angeordnet ist.

10. Werkzeugmaschine nach Anspruch 9, **dadurch gekennzeichnet, dass** die linke Endposition der linken Bearbeitungseinheit (10a) eine linke Werkzeugwechselposition zum Wechseln von Werkzeugen aus einem Werkzeugmagazin (22a) in die linke Bearbeitungseinheit (10a) und umgekehrt ist und/oder die rechte Endposition der rechten Bearbeitungseinheit (10b) eine rechte Werkzeugwechselposition zum Wechseln von Werkzeugen aus einem Werkzeugmagazin (22b) in die rechte Bearbeitungseinheit (10b) und umgekehrt ist.

11. Werkzeugmaschine nach Anspruch 10, **gekennzeichnet durch** ein linkes Werkzeugmagazin (22a), das Werkzeuge in die linke Bearbeitungseinheit (10a) ein- und auswechselt, und durch ein rechtes Werkzeugmagazin (22b), das Werkzeuge in die rechte Bearbeitungseinheit (10b) ein- und auswechselt.

12. Werkzeugmaschine nach einem der vorhergehenden Ansprüche, **dadurch gekennzeichnet, dass** ein linker Schwenkträger (17a), der im linken Bearbeitungsraum (11a) um eine zur X-Achse (X) parallele A-Achse (A) drehbar gelagert ist, den linken Werkstücktisch (12a) aufweist und/oder ein rechter Schwenkträger (17b), der im rechten Bearbeitungsraum (11b) um eine zur X-Achse (X) parallele A-Achse (A) drehbar gelagert ist, den rechten Werkstücktisch (12b) aufweist.

13. Werkzeugmaschine nach Anspruch 12, **dadurch gekennzeichnet, dass** der linke Werkstücktisch (12a) am linken Schwenkträger (17a) um eine zur A-Achse (A) rechtwinklige C-Achse (C) drehbar gelagert ist und/oder der rechte Werkstücktisch (12b) am rechten Schwenkträger (17b) um eine zur A-Achse (A) rechtwinklige C-Achse (C) drehbar gelagert ist.

14. Verfahren zum Bearbeiten von Werkstücken an einer Werkzeugmaschine (1) nach einem der vorhergehenden Ansprüche,
wobei in einem ersten Bearbeitungsmodus linke Werkstücke (2a) ausschließlich von der linken Arbeitsspindel (14a) und rechte Werkstücke (2b) ausschließlich von der rechten Arbeitsspindel (14b) bearbeitet werden, und
wobei in einem zweiten Bearbeitungsmodus linke Werkstücke (2a) sowohl von der linken Arbeitsspindel (14a) als auch von der rechten Arbeitsspindel (14b) und/oder rechte Werkstücke (2b) sowohl von der linken Arbeitsspindel (14a) als auch von der rechten Arbeitsspindel (14b) bearbeitet werden.

15. Verfahren nach Anspruch 14, **dadurch gekennzeichnet, dass** in einem dritten Bearbeitungsmodus eine der beiden Bearbeitungseinheiten (10a, 10b) für einen Werkzeugwechsel in ihre jeweilige Endposition verfahren wird und hauptzeitparallel rechte und/oder linke Werkstücke (2a, 2b) von der anderen Bearbeitungseinheit bearbeitet werden.

## Geänderte Patentansprüche

### Geänderte Patentansprüche gemäss Regel 137(2) EPÜ.

1. Werkzeugmaschine (1) zur spanenden Bearbeitung von Werkstücken, aufweisend
- einen linken Bearbeitungsraum (11a) mit einem linken Werkstücktisch (12a) zum Aufspannen von linken Werkstücken (2a) und einen rechten Bearbeitungsraum (11b) mit einem rechten Werkstücktisch (12b) zum Aufspannen von rechten Werkstücken (2b), und
- eine entlang einer X-Achse (X) verfahrbare, linke Bearbeitungseinheit (10a) mit einer linken Arbeitsspindel (14a) zur Bearbeitung von Werkstücken (2a, 2b) und eine entlang der X-Achse (X) verfahrbare, rechte Bearbeitungseinheit (10b) mit einer rechten Arbeitsspindel (14b) zur Bearbeitung von Werkstücken (2a, 2b), wobei die linke Bearbeitungseinheit (10a) zwischen einer linken Endposition und der rechten Bearbeitungseinheit (10b) verfahrbar ist und die rechte Bearbeitungseinheit (10b) zwischen einer rechten Endposition und der linken Bearbeitungseinheit (10a) verfahrbar ist,
wobei, wenn sich die linke Bearbeitungseinheit (10a) in ihrer linken Endposition befindet und die rechte Bearbeitungseinheit (10b) bis zur Anlage an die linke Bearbeitungseinheit (10a) verfahren ist, die rechte Bearbeitungseinheit (10b) zumindest teilweise in dem linken Bearbeitungsraum (11a) für eine Bearbeitung von linken Werkstücken (2) angeordnet ist und/oder, wenn sich die rechte Bearbeitungseinheit (10b) in ihrer rechten Endposition befindet und die linke Bearbeitungseinheit (10a) bis zur Anlage an die rechte Bearbeitungseinheit (10b) verfahren ist, die linke Bearbeitungseinheit (10a) zumindest teilweise in dem rechten Bearbeitungsraum (11b) für eine Bearbeitung von rechten Werkstücken (2) angeordnet ist,
**dadurch gekennzeichnet,**
**dass** mindestens eine entlang der X-Achse (X) verlaufende Bodenschiene (16) vorhanden ist, in der sowohl ein linker Fahrständer (13a) der linken Bearbeitungseinheit (10a) als auch ein rechter Fahrständer (13b) der rechten Bearbeitungseinheit (10b) in X-Richtung verfahrbar geführt sind, und
**dass** der linke Fahrständer (13a) und der rechte Fahrständer (13b) jeweils L-förmig mit einem kurzen Horizontalschenkel (18), welcher in der mindestens einen Bodenschiene (16) verschiebbar geführt ist, und mit einem langen Vertikalschenkel (19), welcher die Arbeitsspindel (14a, 14b) trägt, ausgebildet sind und entlang der X-Achse (X) mit den freien Enden ihrer Horizontalschenkel (18) einander zugewandt angeordnet sind.

2. Werkzeugmaschine nach Anspruch 1, **dadurch gekennzeichnet, dass**, wenn sich die linke Bearbeitungseinheit (10a) in ihrer linken Endposition befindet, die rechte Arbeitsspindel (14b) den linken Bearbeitungsraum (11a) in X-Richtung mindestens zu 50%, insbesondere mindestens zu 70%, überdeckt und/oder, wenn sich die rechte Bearbeitungseinheit (10b) in ihrer rechten Endposition befindet, die linke Arbeitsspindel (14a) den rechten Bearbeitungsraum (11b) in X-Richtung mindestens zu 50%, insbesondere mindestens zu 70%, überdeckt.

3. Werkzeugmaschine nach Anspruch 1 oder 2, **dadurch gekennzeichnet, dass** die X-Breite des linken Bearbeitungsraums (11a) mindestens doppelt so groß wie der minimal mögliche X-Spindelabstand (ΔXmin) der beiden Arbeitsspindeln (14a, 14b) ist und/oder die X-Breite des rechten Bearbeitungsraums (11b) mindestens doppelt so groß wie der minimal mögliche X-Spindelabstand (ΔXmin) der beiden Arbeitsspindeln (14a, 14b) ist.

4. Werkzeugmaschine nach einem der vorhergehenden Ansprüche, **dadurch gekennzeichnet, dass** die X-Breite des linken Bearbeitungsraums (11a) und die X-Breite des rechten Bearbeitungsraums (11b) gleich sind.

5. Werkzeugmaschine nach einem der vorhergehenden Ansprüche, **dadurch gekennzeichnet, dass** der linke Fahrständer (13a) und der rechte Fahrständer (13b) zueinander spiegelsymmetrisch ausgebildet sind.

6. Werkzeugmaschine nach einem der vorhergehenden Ansprüche, **dadurch gekennzeichnet, dass** die linke Endposition der linken Bearbeitungseinheit (10a) die äußerst linke Bearbeitungsposition der linken Bearbeitungseinheit (10a) und/oder die rechte Endposition der rechten Bearbeitungseinheit (10b) die äußerst rechte Bearbeitungsposition der rechten Bearbeitungseinheit (10b) ist.

7. Werkzeugmaschine nach einem der Ansprüche 1 bis 5, **dadurch gekennzeichnet, dass** die linke Endposition der linken Bearbeitungseinheit (10a)weiter links als die äußerst linke Bearbeitungsposition der linken Bearbeitungseinheit (10a) angeordnet ist und/oder die rechte Endposition der rechten Bearbeitungseinheit (10b) weiter rechts als die äußerst rechte Bearbeitungsposition der rechten Bearbeitungseinheit (10b) angeordnet ist.

8. Werkzeugmaschine nach Anspruch 7, **dadurch gekennzeichnet, dass** die linke Endposition der linken Bearbeitungseinheit (10a) eine linke Werkzeugwechselposition zum Wechseln von Werkzeugen aus einem Werkzeugmagazin (22a) in die linke Bearbeitungseinheit (10a) und umgekehrt ist und/oder die rechte Endposition der rechten Bearbeitungseinheit (10b) eine rechte Werkzeugwechselposition zum Wechseln von Werkzeugen aus einem Werkzeugmagazin (22b) in die rechte Bearbeitungseinheit (10b) und umgekehrt ist.

9. Werkzeugmaschine nach Anspruch 8, **gekennzeichnet durch** ein linkes Werkzeugmagazin (22a), das Werkzeuge in die linke Bearbeitungseinheit (10a) ein- und auswechselt, und durch ein rechtes Werkzeugmagazin (22b), das Werkzeuge in die rechte Bearbeitungseinheit (10b) ein- und auswechselt.

10. Werkzeugmaschine nach einem der vorhergehenden Ansprüche, **dadurch gekennzeichnet, dass** ein linker Schwenkträger (17a), der im linken Bearbeitungsraum (11a) um eine zur X-Achse (X) parallele A-Achse (A) drehbar gelagert ist, den linken Werkstücktisch (12a) aufweist und/oder ein rechter Schwenkträger (17b), der im rechten Bearbeitungsraum (11b) um eine zur X-Achse (X) parallele A-Achse (A) drehbar gelagert ist, den rechten Werkstücktisch (12b) aufweist.

11. Werkzeugmaschine nach Anspruch 10, **dadurch gekennzeichnet, dass** der linke Werkstücktisch (12a) am linken Schwenkträger (17a) um eine zur A-Achse (A) rechtwinklige C-Achse (C) drehbar gelagert ist und/oder der rechte Werkstücktisch (12b) am rechten Schwenkträger (17b) um eine zur A-Achse (A) rechtwinklige C-Achse (C) drehbar gelagert ist.

12. Verfahren zum Bearbeiten von Werkstücken an einer Werkzeugmaschine (1) nach einem der vorhergehenden Ansprüche,
wobei in einem ersten Bearbeitungsmodus linke Werkstücke (2a) ausschließlich von der linken Arbeitsspindel (14a) und rechte Werkstücke (2b) ausschließlich von der rechten Arbeitsspindel (14b) bearbeitet werden, und
wobei in einem zweiten Bearbeitungsmodus linke Werkstücke (2a) sowohl von der linken Arbeitsspindel (14a) als auch von der rechten Arbeitsspindel (14b) und/oder rechte Werkstücke (2b) sowohl von der linken Arbeitsspindel (14a) als auch von der rechten Arbeitsspindel (14b) bearbeitet werden.

13. Verfahren nach Anspruch 12, **dadurch gekennzeichnet, dass** in einem dritten Bearbeitungsmodus eine der beiden Bearbeitungseinheiten (10a, 10b) für einen Werkzeugwechsel in ihre jeweilige Endposition verfahren wird und hauptzeitparallel rechte und/oder linke Werkstücke (2a, 2b) von der anderen Bearbeitungseinheit bearbeitet werden.
